# EUROPÄISCHE PATENTSCHRIFT

(11) **EP 1 001 305 B1**
(45) Veröffentlichungstag und Bekanntmachung des Hinweises auf die Patenterteilung: **18.08.2004**
(21) Anmeldenummer: 99121802.5
(22) Anmeldetag: 04.11.1999
(51) Int. Cl.: G02F 1/1335

(54) **Lichtquelle mit heizbarem Reflektor**
Light source with heatable reflector
Source lumineuse avec réflecteur pouvant être chauffé

(30) Priorität: 10.11.1998 DE 19851635
(43) Veröffentlichungstag der Anmeldung: 17.05.2000
(73) Patentinhaber: ROBERT BOSCH GMBH, 70442 Stuttgart (DE)
(72) Erfinder: Kircher, Jens, 70839 Gerlingen (DE)
(74) Vertreter: Gleiss & Grosse

(56) Entgegenhaltungen:
- EP-A- 0 389 280
- DE-A- 2 458 637
- DE-A- 4 137 260
- DE-U- 29 700 485
- US-A- 4 645 974
- US-A- 4 798 997
- TOSHIYUKI TERADA ET AL: "DEVELOPMENT OF CENTRAL INFORMATION DISPLAY OF AUTOMOTIVE APPLICATION" US,PLAYA DEL REY, SID,1989, Seiten 192-195, XP000076864
- MERCER W B ET AL: "FLUORESCENT BACKLIGHTS FOR LCDS" INFORMATION DISPLAY,US,PALISADES INSTITUTE FOR RESEARCH SERVICES. NEW YORK, Bd. 5, Nr. 11, 1. November 1989 (1989-11-01), Seiten 8-13, XP000134990 ISSN: 0362-0972

## Beschreibung

Die Erfindung betrifft eine Beleuchtungsanordnung zur Verwendung mit einem Flüssigkristallanzeigeschirm sowie ein Anzeigeaggregat, das eine solche Beleuchtungsanordnung und einen Flüssigkristallanzeigeschirm umfaßt.

### Stand der Technik

Flüssigkristallanzeigeschirme umfassen im allgemeinen eine Anordnung von zwei parallelen durchsichtigen Scheiben, ein zwischen den Scheiben angeordnetes flüssigkristallines Medium sowie Polarisatoren für das durch das Medium hindurchtretende Licht. Da im Gegensatz zu anderen bekannten Anzeigetechniken wie Kathodenstrahlröhren oder Plasmaanzeigen Flüssigkeitsanzeigen nicht selbstleuchtend sind, ist es bei vielen Anwendungen von Flüssigkristallanzeigeschirmen erforderlich, diese zu hinterleuchten, um eine einwandfreie Lesbarkeit der Anzeige sicherzustellen. Als Lichtquellen zu diesem Zweck sind zum Beispiel Kaltkathodenlampen verbreitet.

Flüssigkristallanzeigen und Kaltkathodenlampen haben den gemeinsamen Nachteil, daß sie bei tiefen Temperaturen, so wie sie insbesondere in abgestellten Kraftfahrzeugen leicht auftreten können, nicht befriedigend funktionieren. Für eine gegebene Flüssigkristall-Zusammensetzung ist der Temperaturbereich, in dem sie optische Anisotropie aufweist beziehungsweise diese Anisotropie mit befriedigenden Reaktionszeiten steuerbar ist, beschränkt. Die Anzeigen versagen deshalb bei niedrigen Temperaturen.

Auch Kaltkathodenlampen sind bei niedriger Umgebungstemperatur schwierig oder gar nicht zu zünden; außerdem weisen sie nach dem Zünden bei niedriger Temperatur häufig häßliche Verfärbungen auf, die, auch wenn sie nicht von Dauer sind, einen Benutzer stören und Zweifel an der Funktionsfähigkeit des Anzeigeaggregats wecken können.

Eine bislang von der Anmelderin eingesetzte Lösung dieses Problems ist, die Kaltkathodenlampe einer solchen Anordnung zu beheizen, indem in ihrer Nachbarschaft eine matte Folie angeordnet wird, auf deren Rückseite ein Dünnschicht-Leiter strukturiert ist, welcher als elektrischer Heizwiderstand eingesetzt werden kann. Die Herstellung dieser Leiter ist relativ aufwendig und damit teuer. Außerdem ist diese Lösung nur dort einsetzbar, wo bereits durch diffuse Streuung eine ausreichende Qualität der Beleuchtung eines Anzeigeschirms möglich ist. Dies ist insbesondere dann nicht der Fall, wenn die Fläche des Anzeigeschirms groß oder die zur Verfügung stehende Bautiefe gering ist.

Die europäische Patentanmeldung EP 636 918 A beschreibt ein Beleuchtungselement für einen Flüssigkristallanzeigeschirm der im Oberbegriff des Anspruchs 1 definierten Bauart. Dieses bekannte Beleuchtungselement besteht aus einer Lichtquelle, z.B. einer Kaltkathodenlampe, und einem Reflektor, der aus einem Trägerkörper und einer metallischen Reflexionsschicht, z.B. aus Silber, gebildet ist. Die Reflexionsschicht ist auf der der Lichtquelle zugewandten Oberfläche des Trägerkörpers aufgebracht.

Die europäische Patentanmeldung EP 389 280 A offenbart ein Beleuchtungselement mit einer Lichtquelle und einem Reflektor, der aus einem Träger aus Polycarbonat mit darauf aufgebrachter lichtreflektierender Beschichtung besteht. Zur Heizung der Lichtquelle werden entweder auf die Oberfläche der Lampe und/oder auf die lichtreflektierende Beschichtung Heizelemente aufgebracht.

### Vorteile der Erfindung

Das erfindungsgemäße Beleuchtungselement weist die Merkmale des Anspruchs 1 auf.

Das Beleuchtungselement mit den Merkmalen des Anspruchs 1 hat den Vorteil, daß eine darin verwendete Lichtquelle auf einer Temperatur gehalten werden kann, auf der sie ohne Schwierigkeiten zündet, ohne daß hierfür zusätzliche Teile in der Nähe der Lichtquelle vorgesehen werden müßten, die den Platzbedarf erhöhen oder die Anwendungsmöglichkeiten beschränken. Dabei wird ausgenutzt, daß die bei Spiegeln verbreitete metallische Reflexionsschicht, zum Beispiel aus Silber oder Aluminium, von Natur aus elektrisch leitfähig ist und dünn genug hergestellt werden kann, um einen nicht vernachlässigbaren elektrischen Widerstand aufzuweisen, an dem eine Heizleistung aufgebracht werden kann.

Als Anschlußelemente zum Leiten des elektrischen Stroms durch die Reflexionsschicht sind zwei Drähte, vorzugsweise an gegenüberliegenden Enden der Reflexionsschicht, ausreichend.

Bei der erfindungsgemäßen Beleuchtungsanordnung ist die Reflexionsschicht an einer der Lichtquelle zugewandten Oberfläche eines Trägerkörpers angeordnet.

Die Emissivität einer verspiegelten Fläche wie der Reflexionsschicht an der der Lichtquelle zugewandten Oberfläche des Trägerkörpers ist im Vergleich zu der eines schwarzen Strahlers sehr gering. Infolgedessen wird die beim Fluß eines elektrischen Stroms durch die Reflexionsschicht anfallende Wärme nur langsam auf die Lichtquelle abgestrahlt. Um den konkurrierenden Wärmeabfluß über eine von der Lichtquelle abgewandte Oberfläche des Trägerkörpers klein zu halten, sollte deren Emissivität zweckmäßigerweise ebenfalls gering sein. Da Maßnahmen zur Verringerung der Emissivität sich auf die Herstellungskosten der Beleuchtungsanordnung auswirken, muß ein Kompromiß zwischen diesen Kosten und dem Energieaufwand zum Heizen gefunden werden. Allgemein sollte die Emissivität der abgewandten Oberfläche nicht größer als das 1,5 - 2-fache der zugewandten Oberfläche sein.

Geringe Emissivität läßt sich mit einer Metallbeschichtung erreichen.

Eine andere Möglichkeit ist, die abgewandte Oberfläche spiegelnd auszubilden.

Diese Maßnahme ist bereits für sich allein bereits wirksam, um die Emissivität einer blanken Glasoder Kunststoffoberfläche des Trägerkörpers zu verringern, kann aber selbstverständlich auch an einer metallbeschichteten Oberfläche getroffen werden.

Die Lichtquelle ist vorzugsweise stabförmig und liegt in einer Wellenlinie des sich parallel zur Lichtquelle erstreckenden Reflektors. Dieser kann zum Beispiel einen kreisbogen- oder parabelförmigen Querschnitt haben.

Die Beleuchtungsanordnung ist in einem Anzeigeaggregat mit einem Flüssigkristallanzeigeschirm vorzugsweise so angeordnet, daß sie eine hinter dem Flüssigkristallanzeigeschirm liegende Streufläche streifend beleuchtet.

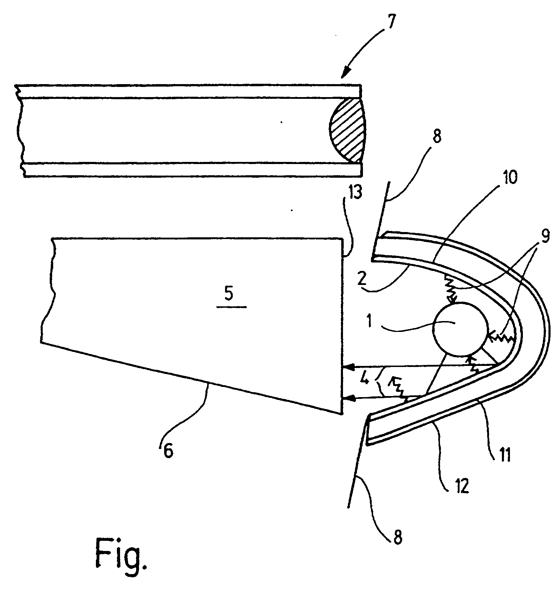

Weitere Merkmale und Vorteile der Erfindung ergeben sich aus der nachfolgenden Beschreibung eines Ausführungsbeispiels mit Bezug auf die beigefügte Figur.

### Ausführungsbeispiel

Die beiliegende Figur zeigt einen Querschnitt durch einen Teilbereich eines LCD-Anzeigeaggregats und einer Beleuchtungsanordnung gemäß der Erfindung.

Die Beleuchtungsanordnung umfaßt als Lichtquelle 1 eine im wesentlichen zylinderförmige Kaltkathodenlampe, deren Längsachse sich senkrecht zur Ebene der Zeichnung erstreckt. Eine Reflexionsschicht 2 aus Metall, zum Beispiel Silber, Aluminium oder aus mit diesen Metallen bedampftem Kupfer erstreckt sich auf einer der Lichtquelle 1 zugewandten Innenseite eines Trägerkörpers 3 von parabelförmigem Querschnitt. Die Lichtquelle 1 liegt im Brennpunkt der Parabel, so daß von der Lichtquelle 1 ausgesandte und an der Reflexionsschicht 2 reflektierte Lichtstrahlen 4 als ein im wesentlichen paralleles kollimiertes Strahlenbündel in einen flachen Wellenleiter 5 in Form eines prismatischen Glaskörpers eintreten. Die Strahlen treffen auf eine mattierte Streufläche 6 an der Rückseite des Wellenleiters 5, von wo aus sie diffus gestreut werden und durch einen Flüssigkristallanzeigeschirm 7 hindurch das Auge eines Betrachters erreichen.

Der Trägerkörper 3 ist ein Kunststoff- oder Glaskörper, auf dessen innerer Oberfläche 10 die Reflexionsschicht 2 in einer Dicke von wenigen Mikrometern aufgedampft oder durch eine herkömmliche Naßverspiegelungsreaktion aufgebracht ist. An den Stirnseiten des Trägerkörpers 3 befindet sich die Reflexionsschicht 2 in elektrischem Kontakt mit zwei Drähten 8, die mit den Polen einer Spannungsquelle verbunden sind und die Reflexionsschicht 2 mit einem Heizstrom versorgen. Der in der Reflexionsschicht 2 fließende Strom wärmt durch Diffusion den Trägerkörper 3 und durch Infrarotstrahlung 9 die Lichtquelle 1, die so, auch wenn sie nicht im Betrieb ist, in kalter Umgebung auf einer Temperatur gehalten werden kann, bei der sie ohne Schwierigkeiten zündet.

Um zu verhindern, daß der Trägerkörper 3 an seiner von der Lichtquelle 1 abgewandten äußeren Oberfläche 11 effektiver Wärme abstrahlt als an der der Lichtquelle zugewandten inneren Oberfläche 10, ist die äußere Oberfläche 11 in der gleichen Weise mit einer Reflexionsschicht 12 versehen, wie die innere Oberfläche 10. Diese Reflexionsschicht wird zweckmäßigerweise in einem gemeinsamen Arbeitsgang mit der Reflexionsschicht 2 aus dem gleichen Metall wie etwa Ag oder Al beziehungsweise der gleichen Kombination von Metallen, zum Beispiel Ag oder Al auf Cu, hergestellt.

Bei der Herstellung der Reflexionsschichten ist zweckmäßigerweise darauf zu achten, daß es möglich sein sollte, die Anschlußelemente 8 so anzubringen, daß ein Heizstrom allein durch die Reflexionsschicht 2 fließt. Im dargestellten Beispiel ist dies dadurch erreicht, daß die Stirnseiten des Trägerkörpers 3, an denen die drahtförmigen Anschlußelemente 8 mit der Reflexionsschicht 2 verbunden sind, selber keine Reflexionsschicht aufweisen, und daß die Reflexionsschicht 12 jeweils kurz vor der Stirnseite endet.

Die Anschlußelemente 8 können alternativ auch an in Richtung der Achse der Lichtquelle 1 gegenüberliegenden Enden der Reflexionsschicht 2 angeordnet sein. Dies ist insbesondere dann zweckmäßig, wenn die Länge der Reflexionsschicht groß ist und somit der elektrische Widerstand der Reflexionsschicht 2 in Richtung der Achse größer ist als bei der in der Figur gezeigten Art der Kontaktierung.

Als weitere Alternative kann die Reflexionsschicht, statt direkt auf dem Trägerkörper 3 erzeugt zu werden, zunächst auf eine flexible Folie aufgedampft und diese am Trägerkörper angebracht, zum Beispiel kaschiert werden.

Um die Effizienz der Beheizung der Lichtquelle zu verbessern, kann ferner eine infrarotreflektierende Beschichtung an der Eintrittsseite 13 des Wellenleiters 5 vorgesehen werden, die in Richtung des Wellenleiters abgestrahlte Wärmestrahlung zur Lichtquelle 1 zurückwirft.

Die oben beschriebene Beleuchtungsanordnung ist auch bei tiefen Umgebungstemperaturen in der Lage, schnell und ohne unerwünschte Nebeneffekte die Lichtquelle zu zünden. Nachdem die Lichtquelle gezündet ist, erreicht auch der Flüssigkristallanzeigeschirm durch Absorption von Licht und Wärme, die von der Lampe abgegeben werden, schnell eine geeignete Arbeitstemperatur.

## Patentansprüche

1. Beleuchtungselement für einen Flüssigkristallanzeigeschirm (7) mit einer Lichtquelle (1) und einem Reflektor (2,3) zum Reflektieren von von der Lichtquelle (1) abgegebenem Licht, der eine metallische Reflexionsschicht (2) und einen Trägerkörper (3) mit einer der Lichtquelle (1) zugewandten. Oberfläche (10), die die Reflexionsschicht (2) trägt, aufweist, **dadurch gekennzeichnet, dass** der Reflektor (2, 3) Anschlusselemente (8) zum Leiten eines elektrischen Stromes durch die Reflexionsschicht (2) aufweist, und dass der Trägerkörper (3) auf einer der Lichtquelle (1) abgewandten Oberfläche (11) eine Metallbeschichtung (12) aufweist und/oder eine abgewandte Oberfläche (11) Spiegelnd ausgebildet ist, so dass eine Oberfläche (11) mit geringer Emissivität für Wärmestrahlung erreicht wird.

2. Beleuchtungsanordnung nach Anspruch 1, **dadurch gekennzeichnet, dass** die Anschlusselemente (8) zwei Drähte sind.

3. Beleuchtungsanordnung nach einem der vorhergehenden Anspruche, **dadurch gekennzeichnet, daß** die Lichtquelle (1) stabförmig ist und in einer Brennlinie des sich parallel zur Lichtquelle erstreckenden Reflektors (2,3) angeordnet ist.

4. Beleuchtungsanordnung nach einem der vorhergehenden Ansprüche, **dadurch gekennzeichnet, daß** die Lichtquelle (1) eine Kaltkathodenlampe ist.

5. Anzeigeaggregat mit einem Flüssigkristallanzeigeschirm (7) und einer Beleuchtungsanordnung nach einem der vorhergehenden Ansprüche.

6. Anzeigeaggregat nach Anspruch 5, mit einer Streufläche (6), die sich hinter dem Flüssigkristallahzeigeschirm (7) erstreckt und von der Beleuchtungsanordnung streifend beleuchtbar ist.

## Claims

1. Lighting element for a liquid crystal display screen (7) with a light source (1) and a reflector (2, 3) for reflecting light emitted by the light source (1) which features a metallic reflection layer (2) and a carrier frame (3) with a surface (10) turned towards the light source (1) bearing the reflection layer (2), **characterised in that** the reflector (2,3) has connecting elements (8) for conducting an electric current through the reflection layer (2), and the fact that the carrier frame (3) on a surface (11) opposite to the light source (1) has a metal coating (12) and/or is designed to reflect an opposite surface (11), with the result that a surface (11) with low emissivity for thermal radiation is achieved.

2. Lighting system according to claim 1, **characterised in that** the connecting elements (8) are two wires.

3. Lighting system according to one of the preceding claims, **characterised in that** the light source (1) is rod-shaped and is placed in a focal line of the reflector (2, 3) running parallel to the light source.

4. Lighting system according to one of the preceding claims, **characterised in that** the light source (1) is a cold cathode lamp.

5. Display unit with a liquid crystal display screen (7) and a lighting system according to one of the preceding claims.

6. Lighting system according to claim 5, with a dispersion surface (6) which runs behind the liquid crystal display screen (7) and can be fleetingly illuminated by the lighting system.

## Revendications

1. Elément d'éclairage pour un écran d'affichage à cristaux liquides (7) avec une source lumineuse (1) et un réflecteur (2, 3) pour réfléchir la lumière émise par la source lumineuse (1), cet écran présentant un revêtement réflecteur métallique (2) et un corps de support (3) avec une surface (10) dirigée vers la source lumineuse (1) supportant le revêtement réflecteur (2), **caractérisé en ce que** le réflecteur (2, 3) présente des éléments de raccordement (8) pour conduire un courant électrique au travers du revêtement réflecteur (2) et que le corps de support (3) présente un revêtement métallique (12) sur une surface (11) détournée de la source lumineuse (1) et/ou qu'une surface détournée (11) est réalisée en miroir de sorte qu'une surface (11) au pouvoir d'émission faible pour le rayonnement calorifique soit atteinte.

2. Disposition d'éclairage suivant la revendication 1, **caractérisé en ce que** les éléments de raccordement (8) sont deux fils.

3. Disposition d'éclairage suivant l'une des revendications précédentes, **caractérisée en ce que** la source lumineuse (1) est en forme de baguette et est disposée dans une ligne focale du réflecteur se situant parallèlement à la source lumineuse (2, 3).

4. Disposition d'éclairage suivant l'une des revendications précédentes, **caractérisée en ce que** la source lumineuse (1) est une lampe cathodique froide.

5. Appareil d'affichage avec un écran d'affichage à cristaux liquides (7) et une disposition d'éclairage suivant l'une des revendications précédentes.

6. Appareil d'affichage suivant la revendication 5 avec une surface de diffusion (6) située derrière l'écran d'affichage à cristaux liquides (7) et avec possibilité d'avoir un éclairage rasant par la disposition d'éclairage.
